(19) **Europäisches Patentamt**
**European Patent Office**
**Office européen des brevets**

(11) **EP 1 691 994 B1**

(12) **EUROPÄISCHE PATENTSCHRIFT**

(45) Veröffentlichungstag und Bekanntmachung des Hinweises auf die Patenterteilung:
**15.07.2009 Patentblatt 2009/29**

(51) Int Cl.:
***B60G 17/015*** *(2006.01)*

(21) Anmeldenummer: **04791340.5**

(22) Anmeldetag: **29.10.2004**

(86) Internationale Anmeldenummer:
**PCT/EP2004/052716**

(87) Internationale Veröffentlichungsnummer:
**WO 2005/056315 (23.06.2005 Gazette 2005/25)**

(54) **BESTIMMUNG EINER RELATIVBEWEGUNG EINES FAHRWERKS UND EINES FAHRZEUGAUFBAUS EINES RADFAHRZEUGES**

DETERMINING A RELATIVE MOVEMENT OF A CHASSIS AND A BODY OF A WHEELED VEHICLE

DETERMINATION D'UN MOUVEMENT RELATIF ENTRE LE CHASSIS ET LA CARROSSERIE D'UN VEHICULE A ROUES

(84) Benannte Vertragsstaaten:
**DE FR**

(30) Priorität: **12.12.2003 DE 10358334**

(43) Veröffentlichungstag der Anmeldung:
**23.08.2006 Patentblatt 2006/34**

(73) Patentinhaber: **Continental Automotive GmbH**
**30165 Hannover (DE)**

(72) Erfinder:
• **FIEDLER, Jens**
**93107 Thalmassing (DE)**
• **MAYER, Andreas**
**93049 Regensburg (DE)**
• **SCHWEIGER, Thomas**
**93086 Wörth (DE)**
• **STRATESTEFFEN, Martin**
**93049 Regensburg (DE)**

(56) Entgegenhaltungen:
**EP-A- 1 002 709        US-A- 6 085 133**
**US-B1- 6 298 293        US-B1- 6 647 352**

**Beschreibung**

Die Erfindung betrifft eine Anordnung und ein Verfahren zur Bestimmung einer Relativbewegung eines Fahrwerks und eines beweglich mit dem Fahrwerk verbundenen Fahrzeugaufbaus eines Radfahrzeuges.

Eine Anordnung nach dem Oberbegriff des Anspruchs 1 und ein Verfahren nach dem Oberbegriff des Anspruchs 6 sind aus EP-A-1 002 709 bekannt.

Federwege einer gefederten Verbindung zwischen einem Fahrzeugaufbau und einem Fahrwerk oder Höhenstände der Relativbewegung zwischen dem Fahrwerk und dem Fahrzeugaufbau werden beispielsweise als Eingangsgrößen von Systemen zur Einstellung einer Dämpfung der Relativbewegung und/oder anderen Systemen zur Einstellung und/oder Überwachung von Eigenschaften des Fahrwerks verwendet.

Die Erfindung betrifft insbesondere eine Kombination der Anordnung mit zumindest einem der vorgenannten Systeme oder mit einer beliebigen Kombination derartiger Systeme.

Um die Federwege oder Höhenstände zu bestimmen, ist es bekannt, im Bereich der Räder eine Länge einer Abmessung zwischen dem Fahrwerk und dem Fahrzeugaufbau oder die Veränderung einer Position eines Messpunktes zu messen. Vierrädrige Fahrzeuge besitzen beispielsweise jeweils einen derartigen Messsensor pro Rad oder drei derartige Messsensoren, die im folgenden als Höhenstandssensoren bezeichnet werden.

Höhenstandssensoren sind jedoch verhältnismäßig teuer und unterliegen hohen Beanspruchungen während ihres Einsatzes in einem Kraftfahrzeug. Gründe hierfür sind insbesondere mechanische Belastungen z. B. durch Partikel und Steine, die während der Fahrt in den Bereich zwischen Rädern und Fahrzeugaufbau aufgewirbelt werden, Feuchtigkeit sowie Temperaturschwankungen.

Es ist eine Aufgabe der vorliegenden Erfindung, eine Anordnung und ein Verfahren anzugeben, die eine zuverlässige und kostengünstige Bestimmung einer Relativbewegung eines Fahrwerks und eines beweglich mit dem Fahrwerk verbundenen Fahrzeugaufbaus eines Radfahrzeuges erlauben.

Es wird vorgeschlagen, für die Bestimmung einer Relativbewegung eines Fahrwerks und eines beweglich mit dem Fahrwerk verbundenen Fahrzeugaufbaus eines Radfahrzeuges,

- in dem Radfahrzeug drei jeweils quer zueinander gerichtete Linearbeschleunigungen des Radfahrzeuges und zumindest zwei Drehraten, jeweils einer Drehbewegung oder einer Komponente einer Drehbewegung um eine Koordinatenachse des Radfahrzeuges, zu messen, wobei die zumindest zwei Koordinatenachsen jeweils quer zueinander verlaufen, und

- unter Verwendung der drei Linearbeschleunigungen und der zumindest zwei Drehraten (insbesondere wiederholt) eine momentane Bewegungsposition der Relativbewegung zu bestimmen.

Weiterhin wird folgendes vorgeschlagen: Eine Anordnung zur Bestimmung einer Relativbewegung eines Fahrwerks und eines beweglich mit dem Fahrwerk verbundenen Fahrzeugaufbaus eines Radfahrzeuges, mit

- einer in dem Radfahrzeug angeordneten oder anordenbaren Messeinrichtung, wobei die Messeinrichtung ausgestaltet ist, drei jeweils quer zueinander gerichtete Linearbeschleunigungen des Radfahrzeuges und zumindest zwei Drehraten, jeweils einer Drehbewegung oder einer Komponente einer Drehbewegung um eine Koordinatenachse des Radfahrzeuges, zu messen, wobei die zumindest zwei Koordinatenachsen jeweils quer zueinander verlaufen, und

- einer Auswertungseinrichtung, die mit der Messeinrichtung kombiniert ist und ausgestaltet ist, unter Verwendung der drei Linearbeschleunigungen und der zumindest zwei Drehraten eine momentane Bewegungsposition der Relativbewegung zu bestimmen.

Vorzugsweise weist die Messeinrichtung Beschleunigungssensoren zur Messung der drei Linearbeschleunigungen und Drehratensensoren zur Messung der zumindest zwei Drehraten auf, wobei die Beschleunigungssensoren und die Drehratensensoren Teile einer vorgefertigten, zum Einbau in das Radfahrzeug ausgestalteten gerätetechnischen Einheit sein können. Es handelt sich bei dieser Einheit um eine spezielle Ausführungsform einer sogenannten Inertial Measurement Unit (IMU). Die IMU ist beispielsweise dazu bestimmt, an oder in der Nähe des Schwerpunktes eines Radfahrzeuges befestigt zu werden. Vorzugsweise liegt dann der Schwerpunkt des Radfahrzeuges oder eines Fahrzeugaufbaus des Radfahrzeuges innerhalb der Einheit.

Weiterhin wird bevorzugt, dass die drei Linearbeschleunigungen von der Messeinrichtung als linear voneinander unabhängige Messgrößen messbar sind. Vorzugsweise bilden die Richtungen der jeweils von den Beschleunigungssensoren erfassten Beschleunigungen bzw. Beschleunigungskomponenten die Achsen eines dreidimensionalen rechtwinkligen Koordinatensystems.

Entsprechendes wird für die Ausrichtung der zumindest zwei Koordinatenachsen bevorzugt, bezüglich denen Komponenten des Drehvektors einer Drehbewegung des Fahrzeuges gemessen werden. Mit anderen Worten: Die Messeinrichtung ist derart ausgestaltet, dass die zumindest zwei Achsen jeweils paarweise senkrecht zueinander verlaufen.

Die Messeinrichtung kann z. B. für jede Messgröße einen separaten Sensor aufweisen. Es gibt jedoch auch Sensoren, die gleichzeitig zwei der genannten Messgrößen messen (z. B. zwei Beschleunigungen oder zwei Drehraten).

Insbesondere sind die Messsensoren der Messeinrichtung zur Messung der Drehraten und zur Messung der Linearbeschleunigungen an dem relativ zu einem Fahrzeug-Fahrwerk beweglichen Fahrzeugaufbau befestigt. Dabei ist es bei der erfindungsgemäßen Lösung möglich, zumindest einen Teil der Sensoren und vorzugsweise alle Sensoren an einer gegen Umwelteinflüsse geschützten Stelle anzuordnen. Hierfür bietet sich in vielen Fällen der Bereich des Schwerpunktes des Radfahrzeuges oder der Bereich des Schwerpunktes eines Fahrzeugaufbaus an.

Beschleunigungssensoren messen abhängig von der Orientierung des Fahrzeuges eine durch die Erdanziehungskraft beeinflusste Messgröße. Im Stillstand des Fahrzeuges misst der Beschleunigungssensor lediglich die Auswirkungen der Erdanziehungskraft. Die wirkliche Beschleunigung kommt dann in der gemessenen Größe nicht vor.

In dieser Beschreibung wird die durch die Erdanziehungskraft veränderte dynamische Beschleunigungsgröße als effektive Beschleunigungsgröße bezeichnet. Vorzugsweise werden bei der Bestimmung der Relativbewegung des Fahrwerks und des Fahrzeugaufbaus die effektiven Beschleunigungswerte verwendet. Es wird daher die Erdanziehung bzw. die Schwerkraft mitberücksichtigt, die auch tatsächlich die Relativbewegung des Fahrwerks und des Fahrzeugaufbaus mit beeinflusst. Eine Korrektur der effektiven Beschleunigungswerte, die z. B. durch Integration der gemessenen Drehraten und durch Bestimmung der Orientierung des Fahrzeuges relativ zu einem erdfesten Koordinatensystem möglich wäre, ist nicht erforderlich. Vielmehr wirkt sich die Schwerkraft abhängig von der Fahrsituation (z. B. während der Fahrt auf unterschiedlich geneigter Fahrbahn) in unterschiedlicher Weise auf das Fahrzeug aus und soll mitberücksichtigt werden.

Durch die Verwendung der zumindest zwei Drehraten und der drei Beschleunigungen des Fahrzeuges kann die Relativbewegung zwischen dem Fahrzeugaufbau und dem Fahrwerk auch ohne Höhenstandssoren festgestellt werden. Dies gilt auch für Kurvenfahrten und/oder Fahrten bei geneigter Fahrbahn bzw. geneigtem Untergrund (seitlich und/oder nach vorne geneigt).

Es kann zumindest ein Teil der kostenintensiven Höhenstandssensoren eingespart werden. Andererseits können die Sensoren zur Messung der Linearbeschleunigungen und Drehraten auch für andere Zwecke (z. B. als Eingangsgrößen für weitere elektronische Systeme wie ein Antiblockiersystem oder das elektronische Stabilitätsprogramm) verwendet werden. Weiterhin ist es möglich, vorhandene Höhenstandssensoren hinsichtlich einer zuverlässigen Bestimmung der Federwege und/oder der Höhenpositionen zu überwachen. Liefern die Höhenstandssensoren vorübergehend unplausible Messwerte, kann u. U. unter Einbeziehung weiterer Messgrößen (wie z. B. Fahrgeschwindigkeit, Lenkwinkel) entschieden werden, ob ein Betrieb von Systemen, die die Höhenstände als Eingangsgrößen verwenden, noch möglich ist. Z. B. kann entschieden werden, dass die auf die erfindungsgemäße Art bestimmten Höhenstände (oder äquivalenten Größen) noch verwendet werden können, da die Höhenstandssensoren durch Umwelteinflüsse gestört sind.

Insbesondere wird unter Verwendung der zumindest zwei Drehraten und der drei Linearbeschleunigungen eine Mehrzahl von momentanen Bewegungspositionen berechnet, wobei jede der Bewegungspositionen ein Maß für einen Abstand zwischen dem Fahrzeugaufbau und zumindest einem Rad des Fahrwerks ist.

Vorzugsweise wird die momentane Bewegungsposition unter Berücksichtung einer, insbesondere gedämpften, Federung zwischen zumindest einem der Räder des Radfahrzeuges und einem Fahrzeugaufbau berechnet.

Insbesondere kann die Auswertungseinrichtung eine Berechnungseinheit aufweisen, die ausgestaltet ist, die Relativbewegung zu berechnen. Die Berechnungseinheit weist z. B. einen Mikroprozessor auf.

Die Erfindung wird nun anhand von Ausführungsbeispielen näher erläutert. Dabei wird Bezug auf die beigefügte schematische Zeichnung genommen und eine bevorzugte Ausführungsform beschrieben. Gleiche Bezugszeichen in der Zeichnung bezeichnen gleiche, funktionsgleiche oder äquivalente Einheiten oder Einrichtungen. Die einzelnen Figuren der Zeichnung zeigen:

Fig. 1    ein Straßenkraftfahrzeug mit einer Anordnung zur Bestimmung der Relativbewegung zwischen einem Fahr- werk und einem Fahrzeugaufbau,

Fig. 2    eine Ausgestaltung der in Fig. 1 dargestellten Aus- wertungseinrichtung in Kombination mit einer Mess- einrichtung,

Fig. 3    die in Fig. 1 dargestellte Messeinrichtung in einem gemeinsamen Gehäuse mit der Auswertungseinrichtung,

Fig. 4    ein Modell eines Straßenkraftfahrzeuges mit einem Fahrwerk und mit einem über eine gedämpfte Federung mit dem Fahrwerk verbundenen Fahrzeugaufbau in Sei- tenansicht,

Fig. 5    das Modell gemäß Fig. 4 von vorne,

Fig. 6    eine Darstellung eines Straßenkraftfahrzeuges zur Erläuterung von Abmessungen und Winkeln und

Fig. 7    ein Beispiel für eine Ausgestaltung der in Fig. 1 dargestellten Messeinrichtung.

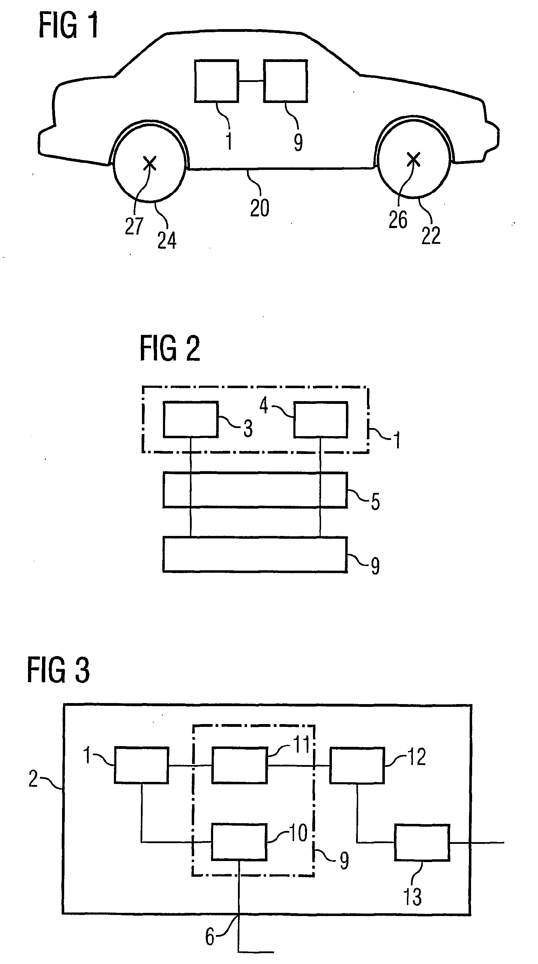

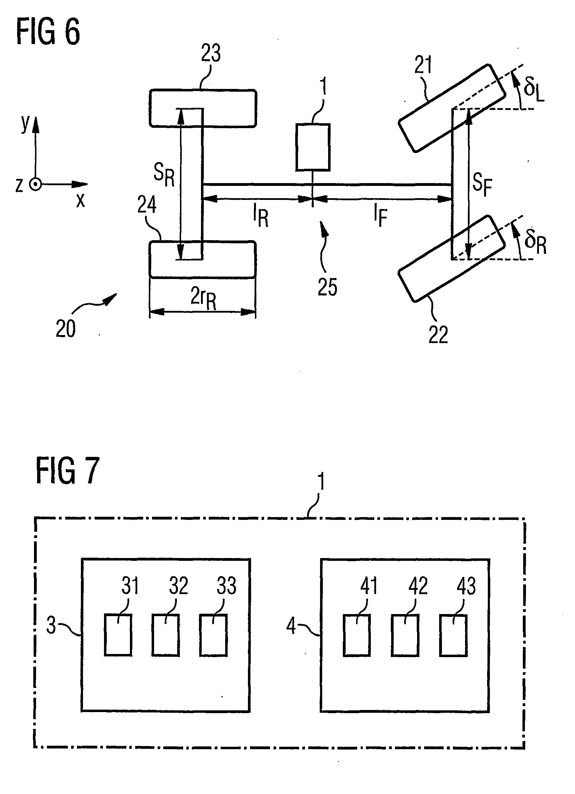

Das in Fig. 1 dargestellte Straßenkraftfahrzeug 20 weist zwei Vorderräder und zwei Hinterräder auf, von denen das rechte Vorderrad mit dem Bezugszeichen 22 bezeichnet ist und von denen das rechte Hinterrad mit dem Bezugszeichen 24 bezeichnet ist. Die Vorderräder sind einer Vorderachse 26 zugeordnet. Die Hinterräder sind einer Hinterachse 27 zugeordnet. Die einer Achse zugeordneten Räder drehen sich bei Geradeausfahrt des Straßenkraftfahrzeuges 20 koaxial, d. h. sie weisen eine gemeinsame Drehachse auf. In dem Straßenkraftfahrzeug 20 ist eine Messeinrichtung 1 angeordnet, die mit einer Auswertungseinrichtung 9 verbunden ist. Wie in Fig. 7 dargestellt ist, weist die Messeinrichtung 1 beispielsweise eine Beschleunigungs-Messeinrichtung 3 und eine Drehraten-Messeinrichtung 4 auf. Die Messeinrichtung 1 ist insbesondere eine vorgefertigte bauliche Einheit, wobei die entsprechenden Messsensoren zur Messung der Beschleunigungen und Drehraten relativ zueinander positionsfest in der Einheit angeordnet sind. Die bautechnische Einheit ist vorzugsweise dazu bestimmt, an oder in der Nähe des Schwerpunktes eines Kraftfahrzeuges befestigt zu werden, wobei eine bestimmte Ausrichtung in dem Kraftfahrzeug angestrebt wird. Insbesondere weist die Beschleunigungs-Messeinrichtung 3 drei Linear-Beschleunigungssensoren 31, 32, 33 auf (Fig. 7), die derart angeordnet sind, dass jeweils einer der Beschleunigungssensoren eine Beschleunigung oder Beschleunigungskomponente des Fahrzeuges in Richtung der Achsen eines kartesischen Koordinatensystems misst, wobei die x-Achse nach vorne in Längsrichtung des Fahrzeuges weist, die y-Achse quer zur Längsachse gerichtet ist und die z-Achse (bei horizontal ausgerichtetem Fahrzeug) senkrecht nach oben weist. Ein derartiges Koordinatensystem ist schematisch in Fig. 6 dargestellt. Diese Figur zeigt ein Straßenkraftfahrzeug 20 mit zwei lenkbaren Vorderrädern 21, 22 und zwei nicht lenkbaren Hinterrädern 23, 24. Die Vorderräder sind in dem dargestellten Zustand nach links eingeschlagen und weisen gegen die x-Achse einen Lenkwinkel von $\delta_L$ (linkes Vorderrad 21) bzw. $\delta_R$ (rechtes Vorderrad 22) auf. Die Vorderräder 21, 22 haben einen Abstand (Radstand) $s_F$, die Hinterräder 23, 24 einen Abstand $s_R$ voneinander. $r_R$ bezeichnet den Radius der Hinterräder 23, 24. In Längsrichtung etwa in der Mitte eines Fahrzeugaufbaus 25 ist die Messeinrichtung 1 angeordnet. Sie hat in Längsrichtung einen Abstand $l_F$ von der Achse der Vorderräder 21, 22 und einen Abstand $l_R$ von der Achse der Hinterräder 23, 24.

Die Erfindung ist nicht auf Radfahrzeuge mit Vorderradlenkung beschränkt. Vielmehr können z. B. zusätzlich auch die Hinterräder lenkbar sein.

Ein Ausführungsbeispiel für die in Fig. 1 gezeigte Anordnung ist in Fig. 2 dargestellt. Die Beschleunigungs-Messeinrichtung 3 ist über eine Filtereinrichtung 5 mit der Auswertungseinrichtung 9 verbunden. Die Drehraten-Messeinrichtung 4 ist über die Filtereinrichtung 5 ebenfalls mit der Auswertungseinrichtung 9 verbunden.

Die in Fig. 2 dargestellte Filtereinrichtung 5 steht stellvertretend für weitere Filtereinrichtungen, die zusätzlich bei den in Fig. 1 bis Fig. 3 dargestellten Anordnungen oder bei abgewandelten Anordnungen vorgesehen sein können. Die von den Filtereinrichtungen durchgeführte Filterung von Messsignalen und/oder daraus abgeleiteten Signalen dient insbesondere der Eliminierung von etwaig vorhandenem Rauschen und der Eliminierung von hochfrequenten Schwankungen der Messsignale, beispielsweise auf Grund von Vibrationen des Fahrzeugaufbaus. Die Filtereinrichtungen können insbesondere zumindest ein Tiefpassfilter und/oder zumindest ein Bandpassfilter aufweisen.

Die Filtereinrichtung 5 filtert die von den Beschleunigungs-Messsensoren der Beschleunigungs-Messeinrichtung 3 gemessenen Beschleunigungssignale und die von den Drehraten-Messsensoren der Drehraten-Messeinrichtung 4 gemessenen Drehratensignale, bevor diese zu der Auswertungseinrichtung 9 übertragen werden.

Wie Fig. 3 zeigt können die Messeinrichtung 1 und die Auswertungseinrichtung 9 zusammen mit weiteren Einheiten und/oder Einrichtungen in einem gemeinsamen Gehäuse 2 angeordnet sein. Wie in der Figur dargestellt ist, kann die Auswertungseinrichtung 9 eine Berechnungseinheit 11 und eine Überwachungseinrichtung 10 aufweisen. Die Berechnungseinheit 11 dient der Berechnung der Relativbewegungen von Fahrzeugaufbau und Fahrwerk. Die Überwachungseinrichtung 10 dient der Überwachung der von der Messeinrichtung 1 erzeugten Messsignale.

Unter Verwendung von Messsignalen eines Lenkwinkels und einer Fahrzeuggeschwindigkeit, die über einen Eingang 6 empfangen werden, führt die Überwachungseinrichtung 10 eine Überwachung von zumindest einer der von der Messeinrichtung 1 gemessenen Größen durch. Beispielsweise verwendet die Überwachungseinrichtung 10 für die Überwachung der Linearbeschleunigungen zumindest zwei Winkel (die durch Integration der Drehraten erhaltenen Wankwinkel und Nickwinkel des Fahrzeuges), die ein Maß für die Orientierung des Fahrzeuges in einem erdfesten Koordinatensystem sind. Auf diese Weise kann sie berücksichtigen, dass die gemessenen Linearbeschleunigungen abhängig von der Orientierung des Fahrzeuges relativ zu dem erdfesten Koordinatensystem eine Komponente enthalten, die auf die Erdanziehung zurückzuführen ist.

Wie ebenfalls in Fig. 3 dargestellt ist, kann die Berechnungseinheit 11 z. B. mit einer Dämpfungs-Stelleinrichtung 12 verbunden sein, um (wie bereits erläutert) eine Dämpfung einer Federung zwischen dem Fahrwerk und dem Fahrzeugaufbau einzustellen. Über eine Schnittstelle 13, mit der z. B. die Dämpfungs-Stelleinrichtung 12 verbunden ist (und die alternativ direkt mit der Berechnungseinheit 11 verbunden sein kann), können entsprechende Informationen über eine solche Fahrsituation an ein System ausgegeben werden, das die Höhenstände und/oder die von der Messeinrichtung gemessenen Linearbeschleunigungen und/oder Drehraten als Eingangsgrößen verwendet.

Im Folgenden wird nun auf ein Beispiel für die Berechnung der Relativbewegung eingegangen, die beispielsweise von der Berechnungseinheit 11 durchgeführt wird. Dabei wird ein physikalisches Fahrzeugmodell verwendet.

Bei dem Modell wird der Fahrzeugaufbau als starrer Körper betrachtet, d. h. es werden keine Elastizitäten des Fahrzeugaufbaus zugelassen. Jedoch ist eine (insbesondere gedämpfte) Federung zwischen den Rädern und dem Fahrzeugaufbau berücksichtigt. Weiterhin werden drei Freiheitsgrade der Relativbewegung zwischen dem Fahrwerk und dem Fahrzeugaufbau zugelassen, nämlich eine lineare Bewegung in z-Richtung (z. B. die Bewegung eines Punktes im Fahrzeugaufbau, an dem die Messeinrichtung misst), eine erste Drehbewegung um eine waagerecht in dem Fahrzeug verlaufende erste Drehachse (insbesondere die x-Achse) und eine zweite Drehbewegung um eine waagerecht in dem Fahrzeug verlaufende zweite Drehachse (insbesondere die y-Achse), die quer zu der ersten Drehachse verläuft.

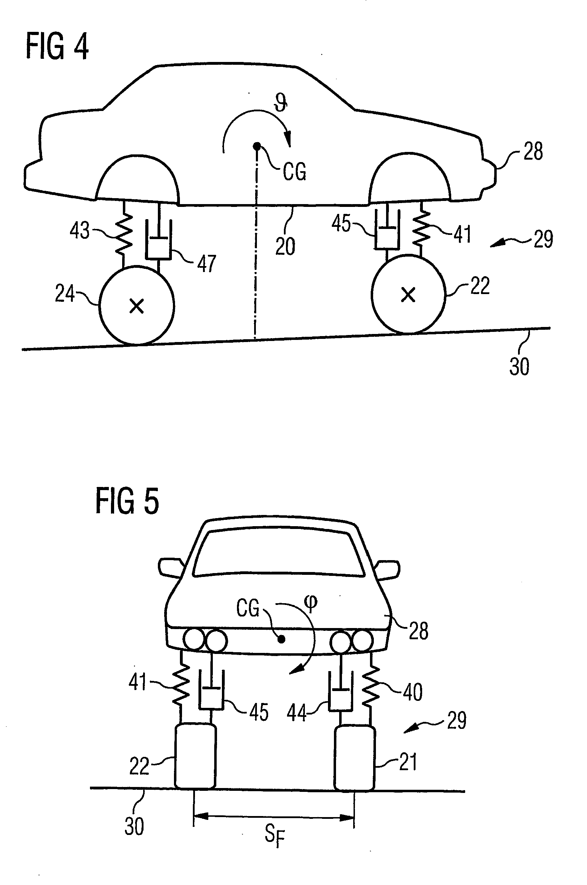

Fig. 4 und Fig. 5 stellen das Modell schematisch dar. Ein Fahrzeugaufbau 28 hat einen Schwerpunkt CG und ist über Federn 40, 41, 43 (gezeigt sind in den beiden Figuren nur drei der vier Räder) und über parallel zu den Federn 40, 41, 43 wirkende Dämpfungsglieder 44, 45, 47 einzeln mit den vier Rädern 21, 22, 23, 24 verbunden. Da die Räder 21, 22, 23, 24 nicht unmittelbar mechanisch miteinander gekoppelt sind, kann man auch von einem Fünf-Massen-Modell sprechen. Die Räder 21, 22, 23, 24 stehen auf dem Untergrund 30 (z. B. einer Fahrbahn) auf. Es hat sich jedoch gezeigt, dass unter bestimmten Voraussetzungen dem Fünf-Massen-Modell ein Zwei-Massen-Modell äquivalent ist, bei dem die Räder und weitere Teile des Fahrwerks eine Masse bilden und der Fahrzeugaufbau die andere Masse bilden. Anstelle der einzelnen Federn zwischen den Rädern und dem Fahrzeugaufbau wird jeweils eine einzige Summenfeder und (optional) jeweils eine zugehörige Dämpfung für jeden der drei genannten Freiheitsgrade betrachtet. Dennoch ist es möglich mit dem Zwei-Massen-Modell die Federwege oder Höhenstände an den vier Rädern einzeln zu berechnen.

Im Rahmen des Modells werden die folgenden Differentialgleichungen gelöst:

$$\kappa_R \Delta\varphi + \gamma_R \Delta\dot{\varphi} = c_R a_y^{(e)} - \dot{\omega}_x$$

$$\kappa_P \Delta\vartheta + \gamma_P \Delta\dot{\vartheta} = -c_P a_x^{(e)} - \dot{\omega}_y$$

$$k\Delta z + \Gamma \Delta\dot{z} = -a_z^{(e)}$$

Dabei sind $\kappa_R$, $\kappa_P$, $k$ Parameter des Fahrzeuges, die einer linearen Federkraft der jeweiligen Bewegungskomponente des Freiheitsgrades entsprechen, $\gamma_R$,

$\gamma_P$, $\Gamma$ Parameter des Fahrzeuges, die einem linearen Dämpfungsterm der jeweiligen Bewegungskomponente entsprechen, $c_R$, $c_P$ weitere Parameter des Fahrzeuges, $\Delta\varphi$ der relative Drehwinkel zwischen Fahrzeugaufbau und Fahrwerk um die x-Achse (Wankwinkel), $\Delta\vartheta$ der relative Drehwinkel zwischen Fahrzeugaufbau und Fahrwerk um die y-Achse (Nickwinkel) und

$$a_j^{(e)}, j = x, y, z$$ die von der am Schwerpunkt des Fahrzeugaufbaus angeordneten Messeinrichtung gemessenen effektiven Linearbeschleunigungen in x-, y- und z-Richtung.

Sämtliche Parameter können vorab beispielsweise experimentell und/oder rechnerisch für ein bestimmtes Fahrzeug oder einen bestimmten Fahrzeugtyp bestimmt werden.

Damit lassen sich die Differentialgleichungen (insbesondere numerisch) lösen und die Bewegungen in den drei Freiheitsgraden $\Delta\varphi$, $\Delta\vartheta$ und $\Delta z$ wiederholt (z. B. mit einer Frequenz von mehr als 100 Hz) bestimmen.

Durch Einsetzen in die Federwegsgleichungen

$$\Delta h_{FL} = \Delta z - l_F \Delta\vartheta + \frac{1}{2} s_F \Delta\varphi$$

$$\Delta h_{FR} = \Delta z - l_F \Delta\vartheta - \frac{1}{2} s_F \Delta\varphi$$

$$\Delta h_{RL} = \Delta z + l_R \Delta\vartheta + \frac{1}{2} s_R \Delta\varphi$$

$$\Delta h_{RR} = \Delta z + l_R \Delta\vartheta - \frac{1}{2} s_R \Delta\varphi$$

erhält man die Federwege $\Delta h_j, j = FL, FR, RL, RR$ (der erste Index F steht für "Front" bzw. "vorne", der erste Index R steht für "Rear" bzw. "hinten", der zweite Index L steht für "links" und der zweite Index R steht für "rechts"), wobei $s_F$ der Radstand der Vorderräder ist, $s_H$ der Radstand der Hinterräder ist und $l_F$, $l_R$ die bereits anhand von Fig. 6 eingeführten Abstände der Messeinrichtung in x-Richtung von der Vorderachse bzw. der Hinterachse sind.

Wie zuvor erwähnt, setzt dieses Modell den Fahrzeugaufbau als in sich starrer Körper voraus und ist damit in guter Näherung für die Fahrt von Kraftfahrzeugen auf Straßen geeignet. Das Modell berücksichtigt, wie beschrieben, Wank- und Nickbewegungen und ist daher insbesondere für Fahrsituationen und/oder Fahrzeuge geeignet, bei denen solche Bewegungen auftreten. Dies ist vor allem bei Fahrzeugen mit hoch über dem Fahrwerk gelegenem Schwerpunkt des Fahrzeugaufbaus der Fall, z. B. bei Lastkraftwagen und geländetauglichen Fahrzeugen.

Bei dem oben angegebenen Satz von drei Differentialgleichungen können insbesondere die folgenden Änderungen vorgenommen werden oder Alternativen realisiert werden:

- die Federn können als nichtlineare Federn beschrieben werden,
- in einer oder mehreren der Gleichungen, insbesondere in der Gleichung für den Nickwinkel $\Delta\vartheta$, kann eine Verteilung einer Bremskraft oder von Bremskräften und/oder einer Antriebskraft oder von Antriebskräften (z. B. bei Allrad-angetriebenen Fahrzeugen) über die Räder zusätzlich berücksichtigt werden und/oder
- die Gleichungen können zumindest teilweise gekoppelt sein.

**Patentansprüche**

1. Anordnung zur Bestimmung einer Relativbewegung eines Fahrwerks und eines beweglich mit dem Fahrwerk verbundenen Fahrzeugaufbaus eines Radfahrzeuges (20), mit

   - einer in dem Radfahrzeug (20) angeordneten oder anordenbaren Messeinrichtung (1), wobei die Messeinrichtung (1) ausgestaltet ist, drei jeweils quer zueinander gerichtete Linearbeschleunigungen des Radfahrzeuges (20) und zumindest zwei Drehraten, jeweils einer Drehbewegung oder einer Komponente einer Drehbewegung um eine Koordinatenachse des Radfahrzeuges (20), zu messen, wobei die zumindest zwei Koordinatenachsen jeweils quer zueinander verlaufen, und
   - einer Auswertungseinrichtung (9), die mit der Messeinrichtung (1) kombiniert ist und ausgestaltet ist, unter Verwendung der drei Linearbeschleunigungen und der zumindest zwei Drehraten eine momentane Bewegungsposition der Relativbewegung zu bestimmen,
   - wobei die Auswertungseinrichtung (9) eine Berechnungseinheit (11) aufweist, die ausgestaltet ist, unter Verwendung der zumindest zwei Drehraten und der drei Linearbeschleunigungen eine Mehrzahl von momentanen Bewegungspositionen zu berechnen, **dadurch gekennzeichnet, dass**
   - jede der Bewegungspositionen ein Maß für einen Abstand zwischen dem Fahrzeugaufbau und zumindest einem Rad des Fahrwerks ist.

2. Anordnung nach Anspruch 1, wobei die Messeinrichtung (1) Beschleunigungssensoren (31, 32, 33) zur Messung der Linearbeschleunigungen und Drehratensensoren (41, 42, 43) zur Messung der Drehraten aufweist und wobei die Beschleunigungssensoren (31, 32, 33) und die Drehratensensoren Teile einer vorgefertigten, zum Einbau in das Radfahrzeug (20) ausgestalteten gerätetechnischen Einheit (2) sind.

3. Anordnung nach Anspruch 1 oder 2, wobei die Messeinrichtung (1) derart ausgestaltet ist, dass die drei Linearbeschleunigungen als linear voneinander unabhängige Messgrößen messbar sind.

4. Anordnung nach einem der Ansprüche 1 bis 3, wobei die Messeinrichtung (1) derart ausgestaltet ist, dass die zumindest zwei Koordinatenachsen jeweils paarweise senkrecht zueinander verlaufen.

5. Anordnung nach einem der Ansprüche 1 bis 4, wobei die Auswertungseinrichtung (9) eine Berechnungseinheit (11) aufweist, die ausgestaltet ist, die momentane Bewegungsposition unter Berücksichtung einer, insbesondere gedämpften, Federung (40, 41, 43) zwischen zumindest einem der Räder (21, 22, 23, 24) des Radfahrzeuges (20) und einem Fahrzeugaufbau (28) zu berechnen.

6. Verfahren zur Bestimmung einer Relativbewegung eines Fahrwerks und eines beweglich mit dem Fahrwerk verbundenen Fahrzeugaufbaus eines Radfahrzeuges (20), wobei

   - in dem Radfahrzeug (20) drei jeweils quer zueinander gerichtete Linearbeschleunigungen des Radfahrzeuges (20) und zumindest zwei Drehraten, jeweils einer Drehbewegung oder einer Komponente einer Drehbewegung um eine Koordinatenachse des Radfahrzeuges (20), gemessen werden, wobei die zumindest zwei Koordinatenachsen jeweils quer zueinander verlaufen, und
   - unter Verwendung der drei Linearbeschleunigungen und der zumindest zwei Drehraten eine momentane Bewegungsposition der Relativbewegung bestimmt wird;
   - unter Verwendung der zumindest zwei Drehraten und der drei Linearbeschleunigungen eine Mehrzahl von momentanen Bewegungspositionen berechnet wird, **dadurch gekennzeichnet, dass**
   - jede der Bewegungspositionen ein Maß für einen Abstand zwischen dem Fahrzeugaufbau und zumindest einem Rad des Fahrwerks ist.

**7.** Verfahren nach Anspruch 6, wobei die Linearbeschleunigungen mit Beschleunigungssensoren (31, 32, 33) und die Drehraten mit Drehratensensoren (41, 42, 43) gemessen werden und wobei die Beschleunigungssensoren (31, 32, 33) und die Drehratensensoren Teile einer vorgefertigten, in dem Radfahrzeug (20) angeordneten gerätetechnischen Einheit (1) sind.

**8.** Verfahren nach Anspruch 6 oder 7, wobei die drei Linearbeschleunigungen als linear voneinander unabhängige Messgrößen gemessen werden.

**9.** Verfahren nach einem der Ansprüche 6 bis 8, wobei die zumindest zwei Koordinatenachsen der Drehraten jeweils paarweise senkrecht zueinander verlaufen.

**10.** Verfahren nach einem der Ansprüche 6 bis 9, wobei die momentane Bewegungsposition unter Berücksichtung einer, insbesondere gedämpften, Federung (40, 41, 43) zwischen zumindest einem der Räder (21, 22, 23, 24) des Radfahrzeuges (20) und einem Fahrzeugaufbau (28) berechnet wird.

**Claims**

**1.** Arrangement for determining a relative movement of a chassis and a vehicle body of a wheeled vehicle (20), said vehicle body being movably connected to the chassis, having

- a measuring entity (1) which is arranged or can be arranged in the wheeled vehicle (20), wherein the measuring entity (1) is configured to measure three respectively perpendicular linear accelerations of the wheeled vehicle (20) and at least two rotational speeds, each relating to a rotational movement or a component of a rotational movement about a coordinate axis of the wheeled vehicle (20), wherein the at least two coordinate axes run perpendicularly to each other, and
- an analysis entity (9) which is combined with the measuring entity (1) and is configured to determine a momentary movement position of the relative movement using the three linear accelerations and the at least two rotational speeds,
- wherein the analysis entity (9) includes a calculating unit (11) which is configured to calculate a plurality of momentary movement positions using the at least two rotational speeds and the three linear accelerations,
  **characterised in that**
- each of the movement positions is a measure for a distance between the vehicle body and at least one wheel of the chassis.

**2.** Arrangement according to claim 1, wherein the measuring entity (1) has acceleration sensors (31, 32, 33) for measuring the linear accelerations and rotational speed sensors (41, 42, 43) for measuring the rotational speeds, and wherein the acceleration sensors (31, 32, 33) and the rotational speed sensors are parts of a preprepared hardware unit (2) which is configured for installation in the wheeled vehicle (20).

**3.** Arrangement according to claim 1 or 2, wherein the measuring entity (1) is configured such that the three linear accelerations can be measured as measured variables which are linearly independent of each other.

**4.** Arrangement according to one of the claims 1 to 3, wherein the measuring entity (1) is configured such that the at least two coordinate axes run perpendicularly to each other as a pair in each case.

**5.** Arrangement according to one of the claims 1 to 4, wherein the analysis entity (9) includes a calculating unit (11) which is configured to calculate the momentary movement position with reference to a spring suspension (40, 41, 43), in particular a spring suspension which is moderated, between at least one of the wheels (21, 22, 23, 24) of the wheeled vehicle (20) and a vehicle body (28).

**6.** Method for determining a relative movement of a chassis and a vehicle body of a wheeled vehicle (20), said vehicle body being movably connected to the chassis, wherein

- three respectively perpendicular linear accelerations of the wheeled vehicle (20) and at least two rotational speeds, each relating to a rotational movement or a component of a rotational movement about a coordinate axis of the wheeled vehicle (20), are measured in the wheeled vehicle (20), wherein the at least two coordinate axes run perpendicularly to each other, and
- a momentary movement position of the relative movement is determined using the three linear accelerations and the at least two rotational speeds; wherein
- a plurality of momentary movement positions are calculated using the at least two rotational speeds and the three linear accelerations,
  **characterised in that**
- each of the movement positions is a measure for a distance between the vehicle body and at least one wheel of the chassis.

**7.** Method according to claim 6, wherein the linear accelerations are measured using acceleration sensors (31, 32, 33) and the rotational speeds are measured using rotational speed sensors (41, 42, 43), and wherein the acceleration sensors (31, 32, 33) and the rotational speed sensors are parts of a preprepared hardware unit (1) which is arranged in the wheeled vehicle (20).

8. Method according to claim 6 or 7, wherein the three linear accelerations are measured as measured variables which are linearly independent of each other.

9. Method according to one of the claims 6 to 8, wherein the at least two coordinate axes of the rotational speeds run perpendicularly to each other as a pair in each case.

10. Method according to one of the claims 6 to 9, wherein the momentary movement position is calculated with reference to a spring suspension (40, 41, 43), in particular a spring suspension which is moderated, between at least one of the wheels (21, 22, 23, 24) of the wheeled vehicle (20) and a vehicle body (28).

## Revendications

1. Dispositif pour la détermination d'un mouvement relatif entre un châssis et une carrosserie d'un véhicule sur roues (20) reliée au châssis avec possibilité de mouvement, comprenant

   - un dispositif de mesure (1) disposé ou pouvant être disposé dans le véhicule sur roues (20), le dispositif de mesure (1) étant construit pour mesurer trois accélérations linéaires du véhicule sur roues (20) dirigées à chaque fois transversalement entre elles et au moins deux vitesses de rotation, dont chacune est celle d'un mouvement de rotation ou d'une composante d'un mouvement de rotation autour d'un axe de coordonnées du véhicule sur roues (20), les au moins deux axes de coordonnées s'étendant à chaque fois transversalement entre eux, et
   - un dispositif d'analyse (9) qui est combiné au dispositif de mesure (1) et construit pour déterminer la position instantanée du mouvement relatif à l'aide des trois accélérations linéaires et des au moins deux vitesses de rotation,
   - le dispositif d'analyse (9) présentant une unité de calcul (11) qui est construite pour calculer une pluralité de positions instantanées de mouvement à l'aide des au moins deux vitesses de rotation et des trois accélérations linéaires, ,

   **caractérisé en ce que**
   chacune des positions de mouvement est une mesure pour une distance entre la carrosserie du véhicule et au moins une roue du châssis.

2. Dispositif selon la revendication 1, dans lequel le dispositif de mesure (1) comprend des capteurs d'accélération (31, 32, 33) pour la mesure des accélérations linéaires et des capteurs de vitesse de rotation (41, 42, 43) pour la mesure des vitesses de rotation, et dans lequel les capteurs d'accélération (31, 32, 33) et les capteurs de vitesse de rotation font partie d'une unité technique d'appareillage (2) préalablement fabriquée, destinée à être montée dans le véhicule sur roues (20).

3. Dispositif selon la revendication 1 ou 2, dans lequel le dispositif de mesure (1) est construit de telle manière que les trois accélérations linéaires puissent être mesurées sous la forme de grandeurs mesurées linéairement indépendantes les unes des autres.

4. Dispositif selon une des revendications 1 à 3, dans lequel le dispositif de mesure (1) est construit de telle manière que les au moins deux axes de coordonnées s'étendent perpendiculairement entre eux par paires.

5. Dispositif selon une des revendications 1 à 4, dans lequel le dispositif d'analyse (9) présente une unité de calcul (11) qui est construite pour calculer la position instantanée de mouvement en prenant en compte une suspension (40, 41, 43), en particulier amortie, interposée entre au moins une des roues (21, 22, 23, 24) du véhicule sur roues (20) et une carrosserie de véhicule (28).

6. Procédé pour déterminer un mouvement relatif entre un châssis et une carrosserie de véhicule reliée au châssis avec possibilité de mouvement, dans lequel

   - dans le véhicule sur roues (20), on mesure trois accélérations linéaires du véhicule sur roues (20) dirigées à chaque fois transversalement entre elles et au moins deux vitesses de rotation, dont chacune est celle d'un mouvement de rotation ou d'une composante d'un mouvement de rotation autour d'un axe de coordonnée du véhicule sur roues (20), les au moins deux axes de coordonnées s'étendant à chaque fois transversalement entre eux, et
   - on détermine une position instantanée de mouvement du mouvement relatif à l'aide des trois accélérations linéaires et des au moins deux vitesses de rotation,;
   - on calcule une pluralité de positions instantanées de mouvement à l'aide des au moins deux vitesses de rotation et des trois accélérations linéaires, **caractérisé en ce que**
   - chacune des positions de mouvement est une mesure pour une distance entre la carrosserie du véhicule et au moins une roue du châssis.

**7.** Procédé selon la revendication 6, dans lequel les accélérations linéaires sont mesurées avec des capteurs d'accélération (31, 32, 33) et les vitesses de rotation avec des capteurs de vitesse de rotation (41, 42, 43) et dans lequel les capteurs d'accélération (31, 32, 33) et les capteurs de vitesse de rotation font partie d'une unité technique d'appareillage (1) préalablement fabriquée qui est disposée dans le véhicule sur roues (20).

**8.** Procédé selon la revendication 6 ou 7, dans lequel les trois accélérations linéaires sont mesurées sous la forme de grandeurs mesurées linéairement indépendantes les unes des autres.

**9.** Procédé selon une des revendications 6 à 8, dans lequel les au moins deux axes de coordonnées des vitesses de rotation s'étendent perpendiculairement entre eux par paires.

**10.** Procédé selon une des revendications 6 à 9, dans lequel la position instantanée de mouvement est calculée en prenant en compte une suspension (40, 41, 43), en particulier amortie, interposée entre au moins une des roues (21, 22, 23, 24) du véhicule sur roues (20) et une carrosserie de véhicule (28).

**FIG 1**

**FIG 2**

**FIG 3**

FIG 4

FIG 5

## FIG 6

## FIG 7

**EP 1 691 994 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1002709 A